# EUROPÄISCHE PATENTSCHRIFT

(11) **EP 1 132 259 B1**
(45) Veröffentlichungstag und Bekanntmachung des Hinweises auf die Patenterteilung: **16.11.2005**
(21) Anmeldenummer: 01105894.8
(22) Anmeldetag: 09.03.2001
(51) Int. Cl.: B60R 19/56

(54) **Klappbare Unterfahrschutzeinrichtung**
Foldable underride barrier
Protection anti-encastrement rabbatable

(30) Priorität: 09.03.2000 DE 20004391 U; 22.09.2000 DE 20016473 U
(43) Veröffentlichungstag der Anmeldung: 12.09.2001
(73) Patentinhaber: Franz Xaver Meiller Fahrzeug- und Maschinenfabrik-GmbH & Co KG, 80997 München (DE)
(72) Erfinder: Keuler, Thorsten, D-81927 München (DE); Lettmair, Arno, D-85716 Lohhof (DE)
(74) Vertreter: Tiesmeyer, Johannes

(56) Entgegenhaltungen:
- EP-A- 0 917 993
- EP-A- 0 941 896
- US-A- 4 514 002
- US-A- 4 988 258
- US-A- 5 246 329
- US-A- 5 871 328
- PATENT ABSTRACTS OF JAPAN vol. 1996, no. 05, 31. Mai 1996 (1996-05-31) & JP 08 026050 A (SHINSEI SANGYO KK), 30. Januar 1996 (1996-01-30)
- PATENT ABSTRACTS OF JAPAN vol. 1998, no. 05, 30. April 1998 (1998-04-30) -& JP 10 006893 A (NIPPON FRUEHAUF CO LTD), 13. Januar 1998 (1998-01-13)

## Beschreibung

Die Erfindung betrifft eine Unterfahrschutzeinrichtung für ein Lastentransportfahrzeug nach dem Oberbegriff des Anspruchs 1. Eine derartige Unterfahrschutzeinrichtung ist aus der EP-A-0 917 993 bekannt.

Bei Lastentransportfahrzeugen, also beispielsweise Lastkraftwagen, Anhängern oder dgl., steht der heckseitige Rahmenbereich üblicherweise über den Hinterachsbereich hinaus nach hinten ab, wobei der Rahmen relativ hoch über dem Boden bzw. der Fahrbahn liegt. Es sind in der Vergangenheit Auffahrunfälle vorgekommen, bei denen ein Pkw auf ein Lastentransportfahrzeug aufgefahren und dabei mit seiner Front unter den Rahmen des Lastentransportfahrzeugs geraten ist. Bei diesen Unfällen waren die Pkw-Insassen in höchstem Maße gefährdet, da bei dem Unfallgeschehen die "Knautschzone" des Pkw nicht wirksam werden konnte, weil der Fahrgastraum des Pkw bereits sehr nahe an dem nach hinten abstehenden Rahmen des Lastentransportfahrzeugs herangekommen war, bevor der Pkw durch den Aufprall abgebremst werden konnte. In entsprechender Weise liegt eine besondere Gefährdung für einen Zweiradfahrer vor, der mit seinem Motorrad, Fahrrad oder dgl. auf ein Lastentransportfahrzeug mit nach hinten abstehendem Rahmen auffährt.

Um derartige Unfallsituationen zu vermeiden, hat man Unterfahrschutzeinrichtungen der eingangs genannten Artvorgeschlagen. Die Unterfahrschutzbarriere liegt in ihrer Sicherungsstellung unterhalb und normalerweise heckseitig des nach hinten überstehenden Rahmenbereichs des Lastentransportfahrzeugs, so dass ein von hinten auf das Lastentransportfahrzeug auffahrender Pkw mit seiner Fahrzeugfront auf die Unterfahrschutzbarriere trifft. Der Fahrgastraum des Pkw ist im Auftreffzeitpunkt noch so weit vom Rahmen des Lastentransportfahrzeugs entfernt, dass die "Knautschzone" des Pkw wirksam werden kann, also Aufprallenergie in Deformationsenergie im Knautschzonenbereich umgesetzt und absorbiert werden kann. Die Insassen des Pkw haben somit eine größere Chance, dass der Unfall für sie glimpflich ausgeht.

Es gibt Lastentransportfahrzeuge, bei denen eine Unterfahrschutzbarriere in Form eines Holms starr am Fahrzeugheck fixiert ist, wobei sich der Holm horizontal und quer zur Fahrzeuglängsrichtung erstreckt.

Es gibt jedoch auch Lastentransportfahrzeuge, bei denen der Heckbereich unterhalb des Rahmens in bestimmten Betriebssituationen von hinten her zugänglich sein muss und nicht durch eine Unterfahrschutzbarriere versperrt sein darf. Eine solche Betriebssituation liegt beispielsweise vor, wenn das Lastentransportfahrzeug mit einem Straßenfertiger kombiniert betrieben werden soll, um den Straßenfertiger mit Bitumen oder dgl. zu versorgen. In bekannter Weise ist es erforderlich, dass der Straßenfertiger mit seinem Frontbereich unter dem heckseitigen Rahmenbereich des vorausfahrenden Lastentransportfahrzeugs liegen kann, um den kombinierten Betrieb zu ermöglichen. Für derartige Betriebssituationen kann die Unterfahrschutzbarriere bei Einrichtungen der eingangs genannten Art aus ihrer Sicherungsstellung heraus in die Freigabestellung verschwenkt werden, so dass der Heckbereich des Lastentransportfahrzeugs unterhalb des Rahmens freigegeben ist.

Der Erfindung liegt die Aufgabe zugrunde, bekannte Unterfahrschutzeinrichtungen der eingangs genannten Art insbesondere so zu gestalten, dass sie sich in den jeweiligen Stellungen einfach und Sicher arretieren lassen.

Die Lösung dieser Aufgabe erfolgt erfindungsgemäß durch eine Unterfahrschutzeinrichtung mit den Merkmalen des Anspruchs 1.

Mit der Erfindung wird somit der Weg eines Bausatzsystems auf Plattenbasis für die Realisierung einer möglichst einfachen und gewichtsreduzierten Halterungsanordnung verfolgt. Die Basishalteplatten werden normalerweise unmittelbar an seitlich nach außen weisenden Flächen des Fahrzeugrahmens, üblicherweise Längsträgerflächen, angeschraubt, so dass die Schwenkhebelplatten jeweils seitlich außen an den Basishalteplatten liegen und mit ihren Schwenklageranordnungen eine gemeinsame horizontale Schwenkachse zum Verschwenken der Unterfahrschutzbarriere definieren. Sofern die Unterfahrschutzbarriere nicht in einer bestimmten Schwenkstellung arretiert ist, fällt sie unter der Wirkung der Schwerkraft in die Sicherungsstellung, wobei ein Bereich der Schwenkhebelplatte auf einen vorzugsweise justierbar verstellbaren Stoppanschlag auftrifft, der an der Basishalteplatte fixiert ist.

Unter einem besonderen Aspekt der Erfindung kann eine elektromotorische, hydraulische oder pneumatische Schwenkantriebseinrichtung zum wahlweisen Verschwenken der Unterfahrschutzbarriere vorgesehen sein. Als Schwenkantriebseinrichtung wird ein elektrischer Linearantrieb in Form eines Spindeltriebs favorisiert, der selbsthaltende Eigenschaften hat und somit die Funktion einer Arretiereinrichtung übernehmen kann.

Gemäß einer Weiterbildung der Erfindung sind die Verriegelungslöcher in einer Lochraster-Adapterplatte ausgebildet, welche auswechselbar mitder Schwenkhebelplatte verbunden, insbesondere verschraubt ist. Durch Auswechseln der Lochraster-Adapterplatte gegen eine Lochraster-Adapterplatte mit einem anderen Lochmuster kann somit eine gewünschte Anpassung der möglichen arretierbaren Schwenkstellungen an besondere Gegebenheiten erfolgen, und zwar mit äußerst geringem Montageaufwand, wobei die Schwenkhebelplatte nicht ausgebaut werden muss.

Gemäß einer Weiterbildung der Erfindung ist die Riegelträgerplatte über einen Abstandshalter mit der Basishalteplatte vorzugsweise durch Verschrauben aus-wechselbar verbunden. Der Verriegelungsbolzen ist dabei vorzugsweise in einer Bolzenführungseinrichtung axial verschiebbar geführt, die auswechselbar mit der Riegelträgerplatte, insbesondere mittels Schrauben verbunden und an der der Schwenkhebelplatte abgewandten Seite der Riegelträgerplatte angeordnet ist, wobei der Verriegelungsbolzen eine Durchgangsbohrung der Riegelträgerplatte durchsetzt, um ein betreffendes Verriegelungsloch der Schwenkhebelplatte oder/und einer etwaigen Lochraster-Adapterplatte in Eingriff zu nehmen. Die Riegelträgerplatte ist ein weiteres Bauteil des Bausatzes aus Plattenelementen. Sie dient zur "fliegenden" Lagerung des Verriegelungsbolzens in der Bolzenführungseinrichtung. Da die Bolzenführungseinrichtung an der der Schwenkhebelplatte abgewandten Seite der Riegelträgerplatte, also seitlich außen, angeordnet ist, sind Handbetätigungselemente des Verriegelungsbolzens leicht zugänglich. Die Handbetätigungselemente dienen dazu, den Verriegelungsbolzen gegen die Wirkung des ihn zur Verriegelungsstellung hin vorspannenden Federmechanismus in die Entriegelungsstellung zu überführen, damit die Unterfahrschutzbarriere in eine andere Schwenkstellung verschwenkt werden kann.

Im Sinne einer verbesserten Adaptionsmöglichkeit der Unterfahrschutzeinrichtung nach der Erfindung wird ferner vorgeschlagen, dass die jeweilige Schwenkhebelplatte mittels Schrauben an der Unterfahrschutzbarriere fixiert ist, wobei die Schrauben ein jeweiliges Langloch in einem an der Unterfahrschutzbarriere anliegenden Befestigungsschenkel der Schwenkhebelplatte oder ggf. eines zwischen Schwenkhebelplatte und Unterfahrschutzbarriere vorgesehenen Adapterelements durchsetzen, wobei die Langlöcher so orientiert sind, dass ihr größerer Durchmesser in Längsrichtung der Unterfahrschutzbarriere liegt. Bei festgelegtem Abstand der Verschraubungsstellen an der Unterfahrschutzbarriere ermöglichen die Langlöcher dennoch eine Anpassung an unterschiedliche Fahrzeugrahmenbreiten.

Ferner wird vorgeschlagen, die Unterfahrschutzbarriere als Vierkantholm, insbesondere Vierkantrohr auszubilden, welches in der Anordnung am Lastentransportfahrzeug in der Sicherungsstellung so orientiert ist, dass eine Längskante des Vierkantholms bzw. Vierkantrohrs dachfirstartig mit daran angrenzenden, schräg nach unten verlaufenden Flächen horizontal oben liegt. Bei einer solchen Anordnung können von oben auf die Unterfahrschutzbarriere auftreffende Schmutzansammlungen an den Schrägflächen abgleiten, so dass die Unterfahrschutzbarriere in diesem Sinne schmutzabweisend ist.

Ausführungsbeispiele der Erfindung werden im Folgenden unter Bezugnahme auf die Figuren näher erläutert.
- Fig. 1: zeigt in einer Perspektivdarstellung einen heckseitigen Rahmenbereich für ein Lastentransportfahrzeug mit einer daran angeordneten Unterfahrschutzreinrichtung nach der Erfindung.
- Fig. 2a und 2b: zeigen in einer vergrößerten perspektivischen Darstellung Halterungseinrichtungen der Unterfahrschutzeinrichtung aus Fig. 1, wobei

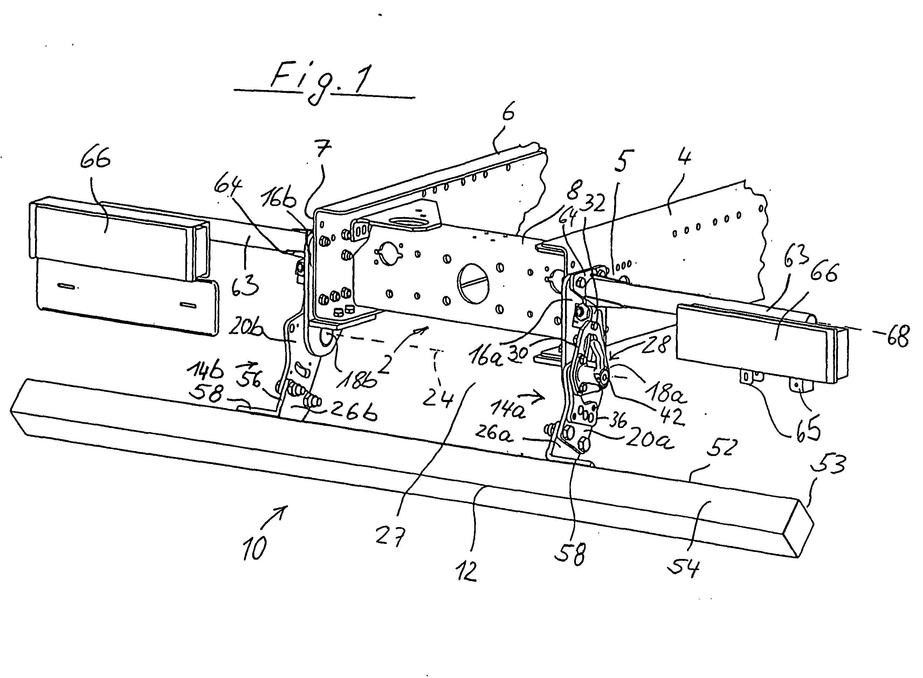

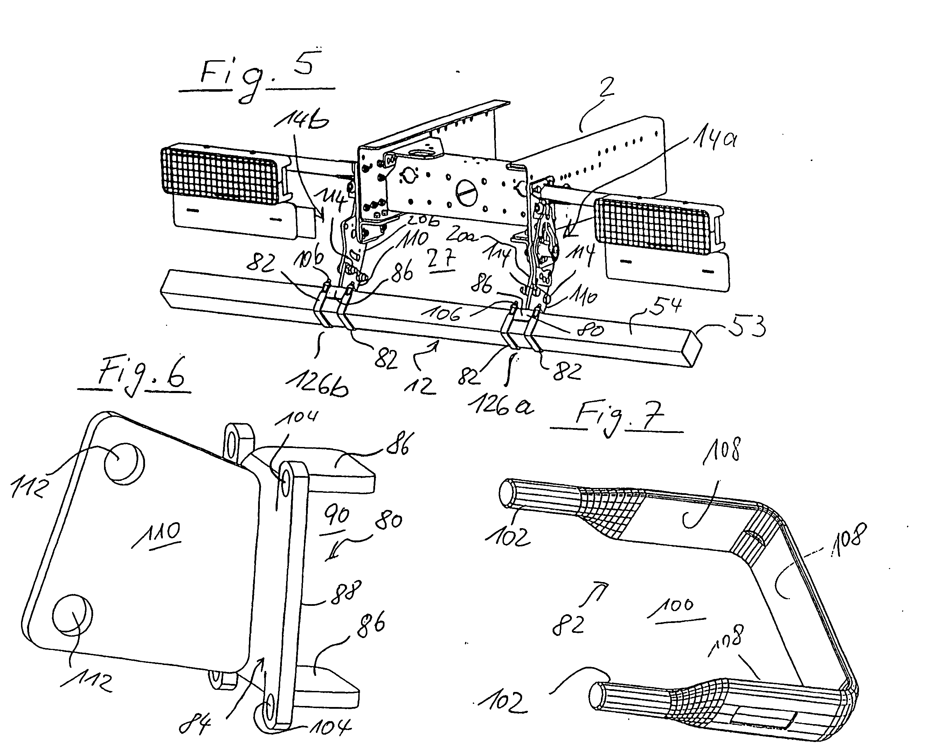

- Fig. 2a: eine in Fig. 1 rechts liegende und mit einer Arretiereinrichtung versehene Halterungseinrichtung darstellt, wohingegen

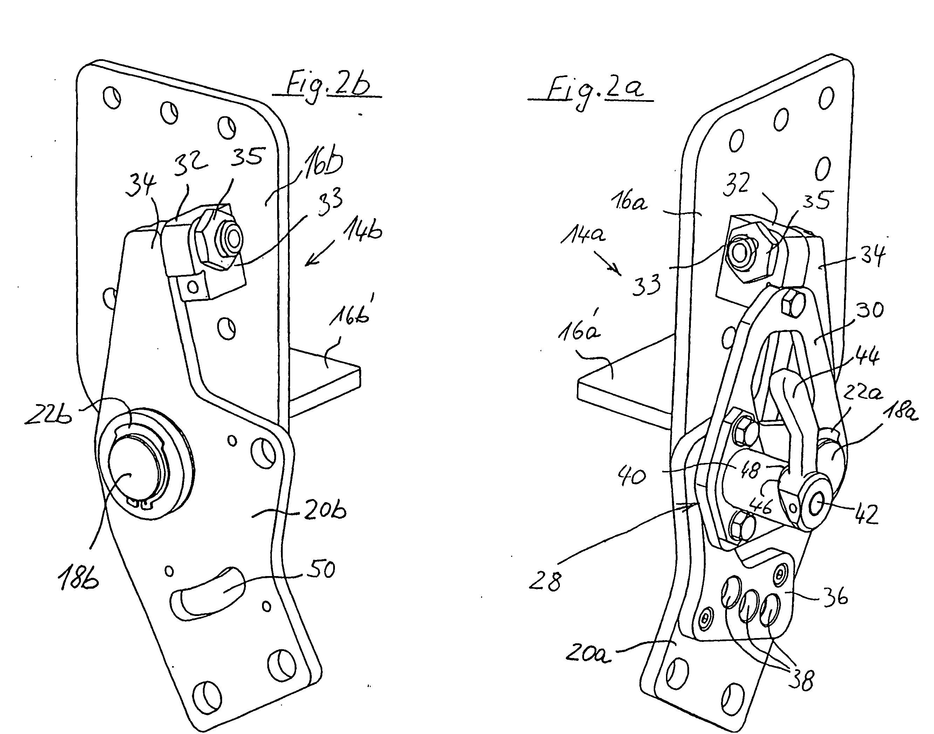

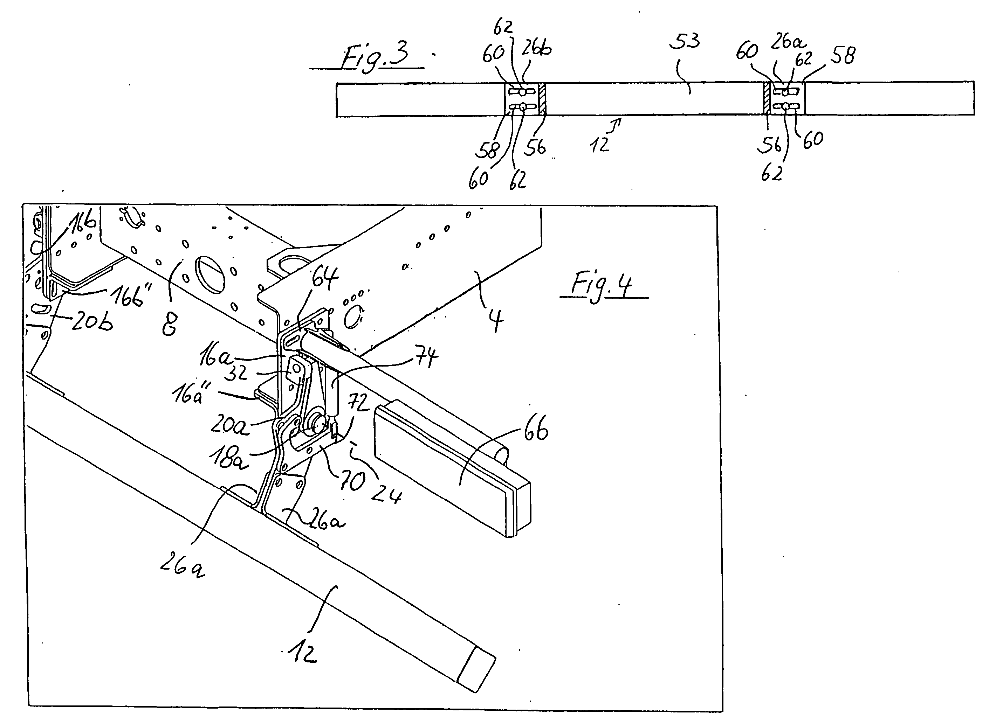

- Fig. 2b: eine in Fig. 1 links liegende Halterungseinrichtung in einer Sicht von seitlich außen darstellt.
- Fig. 3: zeigt eine Draufsichtdarstellung einer Befestigungsfläche 53 der Unterfahrschutzbarriere aus Fig. 1.
- Fig. 4: zeigt in einer perspektivischen Darstellung, ähnlich der gemäß Fig. 1, Details eines weiteren Ausführungsbeispiels einer Unterfahrschutzeinrichtung nach der Erfindung.
- Fig. 5: zeigt in einer perspektivischen Darstellung, ähnlich der gemäß Fig. 1, Details eines weiteren Ausführungsbeispiels einer Unterfahrschutzeinrichtung nach der Erfindung.
- Fig. 6: zeigt in einer perspektivischen Darstellung ein Blechformteil einer Einrichtung zur Fixierung der Unterfahrschutzbarriere an einer Halterungseinrichtung.
- Fig. 7: zeigt als weiteres Element der Einrichtung zur Fixierung der Unterfahrschutzbarriere eine U-Bügelschraube in einer perspektivischen CAD-Darstellung.

Fig. 1 zeigt in einer perspektivischen, teils gebrochen gezeichneten Darstellung den Heckbereich eines Fahrzeugrahmens für einen Lastkraftwagen oder für einen Anhänger. Der im fertig montierten Zustand des Fahrzeugs von den Radachsen bzw. Radaufhängungen getragene Rahmen 2 umfasst im Beispielsfall gemäß Fig. 1 zwei U-Profil-Längsträger 4, 6, die sich in Fahrzeuglängsrichtung erstrecken und durch mehrere Querträger bzw. Querverbindungen, von denen in Fig. 1 lediglich eine, nämlich die Querverbindung 8, erkennbar ist, starr miteinander verbunden sind. Der Rahmen 2 dient in üblicher Weise zur Abstützung von Fahrzeugaufbauten.

Zur Vermeidung des Unterfahrens des Rahmens 2, etwa durch einen Personenkraftwagen im Falle eines Unfalls, ist an dem Rahmen 2 eine Unterfahrschutzeinrichtung 10 nach der Erfindung vorgesehen. Die Unterfahrschutzeinrichtung 10 umfasst eine Unterfahrschutzbarriere 12 in Form eines Vierkantholms, bei dem es sich z.B. um ein Stahlrohr mit quadratischem oder rechteckigem Profilquerschnitt handelt. Die Unterfahrschutzbarriere 12 ist mittels einer Halterungsanordnung aus zwei Halterungseinrichtungen 14a, 14b mit dem Fahrzeugrahmen 2 verbunden, wobei jede der beiden Halterungseinrichtungen 14a, 14b eine Basishalteplatte 16a, 16b aufweist, die mit einem betreffenden Längsträger 4 bzw. 6 des Fahrzeugrahmens 2 starr verschraubt ist, wobei die Basishalteplatten 16a, 1 6b mit einer Flachseite außen auf den in Querrichtung des Fahrzeugs nach außen weisenden Seiten 5, 7 der Längsträger 4, 6 liegen. Jede der beiden Basishalteplatten 16a, 16b trägt einen seitlich nach außen abstehenden Schwenkzapfen 18a bzw. 18b zur schwenkbaren Lagerung einer jeweiligen Schwenkhebelplatte 20a, 20b. Wie insbesondere aus den vergrößerten Darstellungen der Halterungseinrichtungen 14a, 14b in Fig. 2a und 2b zu sehen ist, erstreckt sich der jeweilige Schwenkzapfen 18a bzw. 18b durch eine betreffende Lagerbohrung der Schwenkhebelplatte 20a bzw. 20b, wobei die Schwenkhebelplatten 20a und 20b durch einen jeweiligen Sicherungsring oder Sprengring 22a bzw. 22b gegen axiales Abrutschen vom Schwenkzapfen 18a bzw. 18b nach außen gesichert sind. Die mit ihren Flächenseiten parallel zueinander und parallel zu den Flächenseiten der Basishalteplatten 16a, 16b angeordneten Schwenkhebelplatten 20a, 20b sind vermittels der beiden die Schwenkzapfen 18a, 18b umfassenden Gelenke um eine gemeinsame horizontale Schwenkachse 24 schwenkbar, so dass die mittels der Adapterstücke 26a, 26b mit den Schwenkhebelplatten 20a, 20b verbundene Unterfahrschutzbarriere 12 ebenfalls um die Schwenkachse 24 verschwenkbar ist, und zwar zwischen einer Sicherungsstellung gemäß Fig. 1 und einer nach oben verschwenkten (nicht gezeigten) Freigabestellung. Im Beispielsfall weisen die Basishalteplatten 16a, 16b seitlich nach innen hin abstehende Flanschabschnitte 16a', 16b' auf, die mit unteren Flächen der Längsträger 4, 6 verschraubt sind. Entsprechende Flanschabschnitte 16a', 16b' könnten auch an mit den Basishalteplatten 16a, 16b verschraubten optionalen Winkelplattenelementen 16a", 16b" ausgebildet sein, wie sie in Fig. 4 erkennbar sind. In anderen Ausführungen der Erfindung fehlen die Flanschabschnitte 16a', 16b' vollständig.

In der Sicherungsstellung gemäß Fig. 1 versperrt die Unterfahrschutzbarriere 12 den unter dem Rahmen 2 liegenden Heckbereich 27, so dass im Falle eines auffahrenden Pkw dieser auf die Fahrschutzbarriere 12 trifft und nicht den Rahmen 2 ohne weiteres unterfährt.

Für bestimmte Situationen, in denen der Bereich 27 frei bleiben soll, beispielsweise bei kombiniertem Betrieb des betreffenden Lastentransportfahrzeugs mit einem heckseitig folgenden und vom Lastentransportfahrzeug mit Bitumen oder dgl. zu versorgenden Straßenfertiger, kann die Unterfahrschutzbarriere 12 in ihre Freigabestellung nach oben hin verschwenkt und in der Freigabestellung arretiert werden. Zur Arretierung der Unterfahrschutzbarriere 12 in einer betreffenden Schwenkstellung relativ zum Rahmen 2 dient eine Arretiereinrichtung 28, die an der Halterungseinrichtung 14a vorgesehen ist. Die Arretiereinrichtung umfasst im Beispielsfall der Fig. 1 und Fig. 2a eine Riegelträgerplatte 30, die mit Ausrichtung parallel zur Basishalteplatte 16a an einer von der Basishalteplatte 16a seitlich nach außen abstehenden Anschlagkonsole 32 angeschraubt ist, wobei die Schwenkhebelplatte 20a in der in Fig. 2a erkennbaren Weise zwischen der Riegelträgerplatte 30 und der Basishalteplatte 16a liegt und beim Verschwenken in die Sicherungsstellung mit ihrem von der Unterfahrschutzbarriere 12 entfernten Hebelarmbereich 34 auf die Anschlagkonsole 32 treffen kann. Diesbezüglich wird darauf hingewiesen, dass die Anschlagkonsole 32 Mittel 33 zur Justierung der Auftreffstelle für den Hebelarmbereich bzw. Gegenanschlag 34 aufweist. Bei diesen Mitteln 33 handelt es sich im Beispielsfall um eine die Konsole 32 durchsetzende Schraube, beispielsweise Innensechskantschraube, die mit ihrem schaftseitigen Ende die eigentliche Anschlagfläche für den Gegenanschlag 34 bildet. Die mit einem Gewinde der Konsole 32 verschraubte Einstellschraube 33 kann in der jeweils gewählten Justierstellung mittels einer Kontermutter 35 gekontert werden. Im Beispielsfall sind an beiden Basishalteplatten 16a, 16b Anschlagkonsolen 32 mit justierbaren Anschlagmitteln 33 vorgesehen. Die justierbaren Anschlagmittel 33 sind so eingestellt, dass die Gegenanschläge 34 der Schwenkhebelplatten 20a, 20b gleichzeitig auftreffen, wenn die Unterfahrschutzbarriere in ihre Sicherungsstellung übergeht. Denkbar wäre eine Variante, bei der die Justierbarkeit des Stoppanschlags 32, 33 nur bei einer der beiden Basishalteplatten 16a oder 16b vorgesehen ist.

Die Arretiereinrichtung 28 umfasst ferner eine auswechselbar auf die Schwenkhebelplatte 20a aufgeschraubte Lochraster-Adapterplatte 36 mit Verriegelungslöchern 38, welche verschiedenen Schwenkstellungen der Unterfahrschutzbarriere 12 bzw. der damit verbundenen Schwenkhebelplatte 20 zugeordnet sind, und zwar in dem Sinne, dass ein jeweiliges Verriegelungsloch 38 mit einem Verriegelungsbolzen 42 axial fluchtet und von dem Verriegelungsbolzen in Eingriff genommen werden kann bzw. in Eingriff genommen ist, wenn sich die Schwenkhebelplatte 20a in der betreffenden Schwenkstellung befindet.

Eine Halterungs- und Führungseinrichtung 40 für den Verriegelungsbolzen 42 befindet sich seitlich außen auf der Riegelträgerplatte 30, wobei die Halterungs- und Führungseinrichtung 40 mit der Riegelträgerplatte 30 verschraubt ist. Der Verriegelungsbolzen 42, von dem in den Figuren 1 und 2a lediglich ein außen liegender Betätigungsbereich mit einem Betätigungshebel 44 erkennbar ist, durchsetzt eine Bohrung in der Riegelträgerplatte 30, so dass er mit seinem der Basishalteplatte 16a zugewandten Ende in ein entsprechend der jeweiligen Schwenkstellung der Schwenkhebelplatte 20a axial zu ihm fluchtendes Verriegelungsloch 38 eingreifen kann, um die Schwenkhebelplatte 20a und somit die Unterfahrschutzbarriere 12 relativ zur Basishalteplatte 16a und somit zum Rahmen 2 zu arretieren. Die Figuren 1 und 2a zeigen die Situation der Arretierung des Schwenkhebels 20a in der Schwenkstellung, die mit der Sicherungsstellung der Unterfahrschutzbarriere 12 korrespondiert. Der Verriegelungsbolzen 42 greift in eine in Fig. 2a nicht erkennbare Bohrung der Lochraster-Adapterplatte 36 und ggf. in eine damit fluchtende Bohrung der Schwenkhebelplatte 20a ein. Eine in der Halterungs- und Führungsanordnung 40 des Verriegelungsbolzens 42 vorgesehene Vorspanneinrichtung spannt den Verriegelungsbolzen 42 in Richtung zu seiner in Fig. 2a gezeigten Verriegelungsstellung hin vor. Zum Entriegeln kann der Verriegelungsbolzen 42 um seine Längsachse verdreht werden, indem man eine entsprechende Drehbetätigungskraft auf den Betätigungshebel 44 ausübt. Bei der Drehung des Verriegelungsbolzens 42 kommt es aufgrund der Schrägflächensteuerung zwischen den einander gegenüberliegenden Flächen 46 und 48 zu einer Axialbewegung des Verriegelungsbolzens 42, so dass dieser die Schwenkhebelplatte 20a zum Verschwenken in eine andere Stellung freigibt. Die seitlich nach innen hingewandte Schrägfläche 46 befindet sich an einem Absatz des Verriegelungsbolzens 42, wohingegen die in der Stellung gemäß Fig. 2a parallel zur Fläche 46 verlaufende Schrägfläche 48 an der Halterungs- und Führungsanordnung 40 vorgesehen ist.

In dem Beispielsfall gemäß Fig. 1 und Fig. 2a weist die Lochraster-Adapterplatte 36 drei auf einem Bogen nebeneinander liegende Verriegelungslöcher 38 zur wahlweisen Verriegelung der Unterfahrschutzbarriere 12 in einer von drei entsprechenden Freigabestellungen auf. Die Schwenkhebelplatte 20a weist entlang des Bogens, auf dem die Verriegelungslöcher 38 aufgereiht sind, ein Langloch auf. Ein entsprechendes Langloch 50 ist in Fig. 2b an der Schwenkhebelplatte 20b der Halterungseinrichtung 14b zu erkennen. In diesem Zusammenhang wird darauf hingewiesen, dass die Halterungseinrichtungen 14a und 14b sowie deren einander korrespondierenden Teile in Bezug auf eine zwischen den Längsträgern 4, 6 sich erstreckende vertikale Längsmittenebene im Wesentlichen spiegelsymmetrisch zueinander angeordnet und ausgebildet sind. Die in Fig. 2a gezeigten Mittel 30, 36, 40, 42 könnten alternativ oder zusätzlich bei der Halterungseinrichtung 14b entsprechend seitenangepasst vorgesehen sein.

In der in Fig. 1 gezeigten Sicherungsstellung der Unterfahrschutzbarriere 12 liegt die Längskante 52 der Unterfahrschutzbarriere 12 oben nach Art eines Dachfirstes mit daran angrenzenden Dachflächen 53, 54. Eine solche Anordnung der Unterfahrschutzbarriere 12 bietet den Vorteil, dass von oben auf die Unterfahrschutzbarriere 12 auftreffende Schmutzansammlungen an den Flächen 53, 54 unter der Wirkung der Schwerkraft gleiten und schließlich zu Boden fallen können.

Fig. 3 zeigt eine Darstellung der mit den Adapterelementen 26a und 26b verbundenen Fläche 53 der Unterfahrschutzbarriere 12 in einer Draufsicht, wobei der von der Unterfahrschutzbarriere 12 senkrecht abstehende Schenkel 56 des jeweiligen Adapterelementes 26a bzw. 26b im Schnitt dargestellt ist. Im Beispielsfall handelt es sich bei den Adapterelementen 26a, 26b um Winkelbleche, die an ihren Schenkeln 58 Durchgangs-Langlöcher 60 aufweisen. Durch die Langlöcher 60 sind die Befestigungsschrauben 62 hindurchgeführt, mittels derer die Adapterelemente 26a und 26b an der Unterfahrschutzbarriere 12 angeschraubt sind. Die betreffenden Schrauben stehen mit jeweiligen Gewindebohrungen der Unterfahrschutzbarriere 12 in Schraubeingriff. Die mit ihrer Längserstreckung (größerer Durchmesser) in Längsrichtung derUnterfahrschutzbarriere 12verlaufenden Langlöcher 60 ermöglichen innerhalb des von ihnen begrenzten Spiels ein Verschieben der Unterfahrschutzbarriere 12 zu Justierzwecken, bevor die Befestigungsschrauben 62 zur Fixierung fest angezogen werden. Andererseits können die Langlöcher 60 dazu genutzt werden, unterschiedliche Breiten von Fahrzeugrahmen 2 bei Verwendung gleichartig aufgebauter Unterfahrschutzeinrichtungen bei verschiedenen Lastentransportfahrzeugen auszugleichen.

In Fig. 1 sind an den Basishalteplatten 16a und 16b Lampenhalter 64 in einer Orientierung angeschraubt, bei der die Lampenkörperhalterungsmittel 65 von den Halterohren 63 nach unten hin abstehen und die Lampen 66 somit entsprechend unten angeordnet sind. Bedarfsweise kann jeder der beiden Lampenhalter 64 von der betreffenden Basishalteplatte 16a bzw. 16b abgeschraubt und in einer neuen Orientierung, bei der die Lampenkörperhalterungsmittel 65 nach oben hin vom jeweiligen Halterohr 63 abstehen, wieder an die Basishalteplatte angeschraubt werden. Die Lochmuster in den Basishalteplatten 16a und 16b und in den Lampenhaltern 64 sind entsprechend vorbereitet, so dass zur Umorientierung der Lampenhalter keine neuen Schraublöcher usw. in den Plattenelementen 16a bzw. 16b und 64 vorgesehen werden müssen. Nach dem Umbau der Lampenhalter 64 können die Hecklampen 66 ummontiert werden, so dass sie in einer Anordnung an den nunmehr nach oben hin weisenden Lampenkörperhalterungsmitteln 65 rückwärts leuchten. Durch die Maßnahme des Umorientierens der Lampenhalter 64 und der daran angeordneten Hecklampen 66 in der Weise, dass die Hecklampe 66 und deren Halterungsmittel 65 nach oben hin versetzt werden, kann im Heckbereich unterhalb des Rahmens 2 weiterer Platz geschaffen werden, was zum Beispiel für den kombinierten Betrieb des Lastentransportfahrzeugs mit einem Straßenfertiger von Bedeutung sein kann.

Die Unterfahrschutzeinrichtung nach den Figuren 1 - 3 weist somit Halterungseinrichtungen auf, die im Wesentlichen aus einem Bausatz bzw. einer Baugruppe von bedarfsweise austauschbar miteinander verbundenen, vorzugsweise verschraubten Plattenteilen bzw. Adapterelementen zusammengesetzt sind. Die offene Konsolenbauweise führt zur Gewichtsreduzierung im Vergleich mit bekannten Unterfahrschutzeinrichtungen.

Fig. 4 zeigt in einer Darstellung ähnlich der gemäß Fig. 1 einen Teil eines weiteren Ausführungsbeispiels einer Unterfahrschutzeinrichtung nach der Erfindung, wobei in Fig. 4 jedoch die erforderlichen Befestigungsschrauben zur Verbindung der Elemente der Halterungseinrichtungen 14a, 14b der Einfachheit halber nicht mit eingezeichnet sind, wenngleich die Elemente in der Zusammenbauposition gezeigt sind.

Abweichend von dem Ausführungsbeispiel nach Fig. 1 fehlen bei dem Ausführungsbeispiel nach Fig. 4 verschiedene Elemente der Arretiereinrichtung 28, nämlich die Riegelträgerplatte 30 mit den Verriegelungsbolzenelementen 40, 42, und die Lochraster-Adapterplatte 36. Die Lochraster-Adapterplatte 36 aus Fig. 1 ist in Fig. 4 durch eine mit der Schwenkhebelplatte 20a verschraubte Kraftübertragungsplatte 70 ersetzt worden. Die Kraftübertragungsplatte 70 ist an ihrem vor der Schwenkachse 24 liegenden Ende 72 gelenkig mit einer Schwenkantriebseinrichtung 74 verbunden, die andererseits an der Basishalteplatte 16a abgestützt ist. Bei der in Fig. 4 gezeigten Schwenkantriebsvorrichtung 74 handelt es sich vorzugsweise um einen elektrischen Spindelantrieb (Linearantrieb), der bei entsprechender Ansteuerung die Kraftübertragungsplatte 70 in der Weise beaufschlagt, dass sie die Schwenkhebelplatte 20a, 20b mit der daran fixierten Unterfahrschutzbarriere 12 in die gewünschte Schwenkstellung verschwenkt. Da ein elektrischer Linearantrieb vom Spindeltrieb-Typ selbsthaltend ist, also bei Unterbrechung der Stromzufuhr seine aktuelle Position beibehält, kann der elektrische Spindeltrieb 74 die Funktion der Arretiereinrichtung erfüllen.

Anstelle eines elektrischen Spindeltriebs könnte als Schwenkantriebseinrichtung 74 auch eine pneumatische Kolben-Zylinder-Anordnung oder eine hydraulische Kolben-Zylinder-Anordnung vorgesehen sein.

Eine Schwenkantriebseinrichtung der vorstehend erläuterten Art könnte auch bei dem Ausführungsbeispiel gemäß Fig. 5 vorgesehen sein, wenngleich eine solche Schwenkantriebseinrichtung in Fig. 5 nicht eingezeichnet worden ist. Das Ausführungsbeispiel gemäß Fig. 5 unterscheidet sich von dem Ausführungsbeispiel gemäß Fig. 1 durch die Einrichtungen zur Fixierung der Unterfahrschutzbarriere 12 an den Halterungseinrichtungen 14a, 14b. Im Beispiel der Fig. 1 sind diese Einrichtungen durch die Verbindungselemente 26a, 26b und zugehörige Schraubenelemente gebildet. Bei dem Ausführungsbeispiel gemäß Fig. 5 umfassen die Einrichtungen 126a, 126b zur Fixierung der Unterfahrschutzbarriere 12 an den Halterungseinrichtungen 14a, 14b jeweils ein Blechformteil 80 gemäß Fig. 6 und zwei Bügelschrauben 82 gemäß Fig. 7. Das Blechformteil 80 weist einen U-förmigen Abschnitt 84 mit zwei U-Schenkeln 86 und einer die U-Schenkel 86 miteinander verbindenden Basis 88 auf. Die Schwenkel 86 und die Basis 88 begrenzen einen Aufnahmebereich 90 für die Unterfahrschutzbarriere 12. In der montierten Anordnung der Unterfahrschutzbarriere 12 am Fahrzeug ist die Unterfahrschutzbarriere 12 in dem Aufnahmebereich 90 aufgenommen, wobei die Seitenfläche 53 der Unterfahrschutzbarriere 12 innen an der Basis 88 des Blechformteils 80 anliegt, so dass die Unterfahrschutzbarriere 12 an den an die Fläche 53 angrenzenden Seitenflächen 54 von den U-Schenkeln 86 des Blechformteils in Eingriff genommen ist. Der Aufnahmebereich 90 des Blechformteils ist von der Form und von den Abmessungen her insoweit an die Querschnitt-Außenkontur der Unterfahrschutzbarriere 12 angepasst. Entsprechendes gilt für den Aufnahmebereich 100 der Bügelschrauben 82, welche in der Montageanordnung gemäß Fig. 5 die Unterfahrschutzbarriere 12 von der der Seitenfläche 53 abgewandten Seite her umgreifen und mit einem zugeordneten Blechformteil 80 verbunden sind. Die Bügelschrauben 82 weisen an ihren Schenkelenden Gewindeschaftabschnitte 102 auf, die in der Montageanordnung gemäß Fig. 5 durch in Fig. 6 erkennbare Durchgangslöcher 104 des Blechformteils 80 hindurchgeführt sind. Die Gewindeschaftabschnitte 102 weisen jeweils ein Gewinde auf, das in der Darstellung gemäß Fig. 7 nicht mit eingezeichnet worden ist. In der Montageanordnung gemäß Fig. 5 sind die Bügelschrauben 82 mittels Muttern 106 an dem Blechformteil 80 festgelegt. Im Beispielsfall weisen die Bügelschrauben 82 innen abgeflachte Bereiche 108 auf, die in der Montageanordnung gemäß Fig. 5 flächig an der Unterfahrschutzbarriere anliegen.

Die jeweilige Einrichtung 126a, 126b zur Fixierung der Unterfahrschutzbarriere 12 umschließt die Unterfahrschutzbarriere 12 an deren Umfang. Durch Lösen der Muttern 106 kann die reibschlüssige Verbindung zwischen Unterfahrschutzbarriere 12 und der Einrichtung 126a bzw. 126b gelockert werden, so dass eine seitliche Verstellung der Unterfahrschutzbarriere 12 (Verschiebung in Richtung der Längsachse der Unterfahrschutzbarriere 12) möglich ist, etwa um die Unterfahrschutzbarriere 12 zu justieren oder ggf. auszubauen. Zur Befestigung des Blechformteils 80 an der betreffenden Halterungseinrichtung 14a, 14b weist jedes Blechformteil 80 an der dem Aufnahmeraum 90 abgewandten Seite der Basis 88 eine nach außen abstehende Platte 110 mit Löchern 112 für die Durchführung von Befestigungsschrauben 114 auf, mit denen das betreffende Blechformteil 80 und somit die jeweilige Einrichtung 126a bzw. 126b an der zugeordneten Schwenkhebelplatte 20a bzw. 20b gemäß Fig. 5 befestigt ist.

Dem Ausführungsbeispiel gemäß den Fig. 5 - 7 liegt das Konzept zugrunde, die Unterfahrschutzbarriere 12 mittels Einrichtungen 126a bzw. 126b zu fixieren, welche die Unterfahrschutzbarriere 12 an deren Umfang umschließen, so dass zur Sicherung gegen Verschieben der Unterfahrschutzbarriere 12 in deren Längsrichtung eine vorzugsweise reibschlüssige Verbindung zwischen der betreffenden Einrichtung 126a bzw. 126b und der Unterfahrschutzbarriere 12 herstellbar ist, wobei diese Reibschlussverbindung bei Bedarf lösbar bzw. lockerbar ist, um eine Justage der Unterfahrschutzbarriere 12 zu ermöglichen. Die Einrichtung 126a bzw. 126b umfasst wenigstens zwei einander zugeordnete Bügelelemente 80, 82, die die Unterfahrschutzbarriere 12 von entgegengesetzten Seiten her in Eingriff nehmen und in der Montageanordnung am Fahrzeug miteinander in Verbindung stehen.

Die Einrichtungen 126a, 126b bieten eine mechanisch stabile und robuste Art der Fixierung und Halterung der Unterfahrschutzbarriere 12 an den Schwenkhebelplatten 20a, 20b.

## Patentansprüche

1. Unterfahrschutzeinrichtung für ein Lastentransportfahrzeug, umfassend
eine längliche, normalerweise horizontal angeordnete Unterfahrschutzbarriere zur Sicherung eines heckseitigen Bereichs (27) des Lastentransportfahrzeugs gegen das Auffahren bzw. Unterfahren durch ein anderes Fahrzeug und
eine Halterungsanordnung mit zwei in Längsrichtung der Unterfahrschutzbarriere (12) voneinander beabstandet an der Unterfahrschutzbarriere (12) angeordneten Halterungseinrichtungen (14a, 14b) zur Befestigung der Unterfahrschutzbarriere (12) am heckseitigen Ende des Fahrzeugrahmens (2) oder ggf. am heckseitigen Ende eines rahmenfesten Aufbauteils des Lastentransportfahrzeugs, wobei die Unterfahrschutzbarriere (12) zwischen einer den zu sichernden Bereich (27) sperrenden Sicherungsstellung und einer den Bereich (27) freigebenen Freigabestellung um eine normalerweise horizontale Schwenkachse (24) relativ zum Fahrzeugrahmen (2) verschwenkbar ist, wobei die Halterungsanordnung ferner eine Arretiereinrichtung (28) aufweist, mittels welcher die Unterfahrschutzbarriere (12) in einer jeweiligen Schwenkstellung arretierbar ist,
wobei ferner jede der Halterungseinrichtungen (14a, 14b) eine an dem Fahrzeugrahmen (2) oder ggf. einem rahmenfesten Aufbauteil befestigte Basishalteplatte (16a, 16b) und eine seitlich an der Basishalteplatte (16a, 16b) vermittels einer Schwenklageranordnung (18a, 18b) schwenkbeweglich um die Schwenkachse angeordnete Schwenkhebelplatte (20a, 20b) aufweist, die mit der Unterfahrschutzbarriere (12) ggf. durch ein Verbindungselement (26a, 26b) verbunden ist, und wobei an wenigstens einer Halterungseinrichtung (14a) die zugehörige Schwenkhebelplatte (20a, 20b) Verriegelungslöcher (38) aufweist,
**dadurch gekennzeichnet,**
**dass** von den Verriegelungslöchern jeweils eines mit einem relativ zur Schwenkhebelplatte (20a) und zur Basishalteplatte (16a) zwischen einer Verriegelungsstellung und einer Entriegelungsstellung an einer relativ zur Basishalteplatte (16a) fixierten Riegelträgerplatte (30) axial verschiebbar gehaltenen Verriegelungsbolzen (42) in Eingriff kommen kann, um die Schwenkhebelplatte (20a) und somit die Unterfahrschutzbarriere (12) zu arretieren, wenn die Unterfahrschutzbarriere (12) in der Sicherungsstellung oder in der Freigabestellung ist, wobei die Schwenkhebelplatte (20a) bereichsweise in Sandwichanordnung zwischen der Basishalteplatte (16a) und der Riegelträgerplatte (30) liegt.

2. Unterfahrschutzbarriere nach Anspruch 1, **dadurch gekennzeichnet, dass** der Verriegelungsbolzen (42) zu seiner Verriegelungsstellung hin federnd vorgespannt ist.

3. Unterfahrschutzeinrichtung für ein Lastentransportfahrzeug nach Anspruch 1 oder 2,
**gekennzeichnet durch** eine elektromotorische, hydraulische oder pneuamtische Schwenkantriebseinrichtung (74) zum Verschwenken der Unterfahrschutzbarriere.

4. Unterfahrschutzbarriere nach einem der vorhergehenden Ansprüche, **dadurch gekennzeichnet, dass** der Verriegelungsbolzen (42) in einer Bolzenführungseinrichtung (40, 44, 46, 48) axial verschiebbar geführt ist, welche auswechselbar mit der Riegelträgerplatte (30), insbesondere mittels Schrauben verbunden und an der der Schwenkhebelplatte (20a) abgewandten Seite der Riegelträgerplatte (30) angeordnet ist, wobei der Verriegelungsbolzen (42) eine Durchgangsbohrung der Riegelträgerplatte (30) durchsetzt, um ein betreffendes Verriegelungsloch (38) der Schwenkhebelplatte (20a) in Eingriff zu nehmen.

5. Unterfahrschutzeinrichtung nach einem der vorhergehenden Ansprüche, **dadurch gekennzeichnet, dass** eine die Verriegelungslöcher (38) aufweisende Lochraster-Adapterplatte (36) auswechselbar mit der Schwenkhebelplatte (20a) verbunden, insbesondere verschraubt ist.

6. Unterfahrschutzeinrichtung nach einem der vorhergehenden Ansprüche, **dadurch gekennzeichnet, dass** die jeweilige Schwenkhebelplatte (20a, 20b) mittels Schrauben (62) an der Unterfahrschutzbarriere (12) fixiert ist, wobei die Schrauben (62) ein jeweiliges Langloch (60) in einem an der Unterfahrschutzbarriere (12) anliegenden Befestigungsschenkel (58) der Schwenkhebelplatte oder ggf. eines zwischen Schwenkhebelplatte und Unterfahrschutzbarriere vorgesehenen Adapterelements (26a, 26b) durchsetzen, wobei die Langlöcher (60) so orientiert sind, das ihr größerer Durchmesser in Längsrichtung der Unterfahrschutzbarriere (12) liegt.

7. Unterfahrschutzeinrichtung nach Anspruch 3 oder einem der auf Anspruch 3 direkt oder indirekt bezogenen Ansprüche 4 bis 6, **dadurch gekennzeichnet, dass** die Schwenkantriebseinrichtung (74) einen elektrischen Linearantrieb, insbesondere elektrischen Spindeltrieb, umfasst.

8. Unterfahrschutzeinrichtung nach einem der vorhergehenden Ansprüche, **dadurch gekennzeichnet, dass** die Unterfahrschutzbarriere (12) ein Vierkantstab, insbesondere Vierkantrohr ist, welches in der Anordnung am Lastentransportfahrzeug in der Sicherungsstellung so orientiert ist, dass eine Längskante (52) des Vierkantstabs bzw. Vierkantrohrs dachfirstartig mit daran angrenzenden, schräg nach unten verlaufenden Flächen oben liegt.

9. Unterfahrschutzeinrichtung nach einem der vorhergehenden Ansprüche, **dadurch gekennzeichnet, dass** an wenigstens einer der Basishalteplatten (16a, 16b) ein Stoppanschlag (32) vorgesehen ist, auf den die jeweilige Schwenkhebelplatte (20a bzw. 20b) mit einem Gegenanschlag (34) beim Übergang in die Sicherungsstellung auftrifft.

10. Unterfahrschutzeinrichtung nach Anspruch 9, **dadurch gekennzeichnet, dass** der Stoppanschlag (32) oder/und der Gegenanschlag (34) justierbar verstellbar sind.

11. Unterfahrschutzeinrichtung nach einem der vorhergehenden Ansprüche, **dadurch gekennzeichnet, dass** jeder der Halterungseinrichtungen (14a, 14b) eine jeweilige Einrichtung (126a, 126b) zur Fixierung der Unterfahrschutzbarriere (12) an der Halterungseinrichtung (14a, 14b) zugeordnet ist und dass die jeweilige Einrichtung (126a, 126b) zur Fixierung der Unterfahrschutzbarriere (12) Klemmmittel (80, 82) umfasst, die im Montagezustand am Fahrzeug die Unterfahrschutzbarriere (12) an deren Umfang umschließen und klemmend in Eingriff halten.

12. Unterfahrschutzeinrichtung nach Anspruch 11, **dadurch gekennzeichnet, dass** die Klemmmittel (80, 82) Bügelelemente sind, die durch Schraubverbindungen (102, 106) aneinander befestigbar sind, so dass sie einen der Kontur der Unterfahrschutzbarriere (12) im Wesentlichen angepassten, geschlossenen Aufnahmebereich für die Unterfahrschutzbarriere (12) zwischen sich bilden, wobei die Klemmwirkung zwischen den Klemmelementen (80, 82) und der Unterfahrschutzbarriere (12) durch mehr oder weniger festes Anziehen der betreffenden Schraubelemente einstellbar ist.

13. Unterfahrschutzeinrichtung nach Anspruch 11 oder 12, **dadurch gekennzeichnet, dass** eines (80) der Klemmmittel (80, 82) eine Befestigungsplatte (110) zur Verbindung mit einer Schwenkhebelplatte (20a bzw. 20b) der betreffenden Halterungseinrichtung (14a bzw. 14b) aufweist.

## Claims

1. Underride barrier for a load-transporting vehicle, comprising an elongate underride barrier, which is normally arranged horizontally, to secure a rear region (27) of the load-transporting vehicle against another vehicle driving into it or underneath it and a holding arrangement with two holding devices (14a, 14b) arranged on the underride barrier (12), spaced apart from one another in the longitudinal direction of the underride barrier (12) for fastening the underride barrier (12) to the rear end of the vehicle frame (2) or optionally to the rear end of a body part, which is secured to the frame, of the load-transporting vehicle, the underride barrier (12) being pivotable about a normally horizontal pivot axis (24) relative to the vehicle frame (2), between a securing position blocking the region (27) to be secured and a clearance position clearing the region (27), the holding arrangement also having a locking device (28), by means of which the underride barrier (12) can be locked in a respective pivoting position, with each of the holding devices (14a, 14b) also having a base holding plate (16a, 16b) fastened to the vehicle frame (2) or, optionally, to a body part secured to the frame, and a pivot lever plate (20a, 20b) arranged so as to be pivotable about the pivot axis by means of a pivot bearing arrangement (18a, 18b) at the side of the base holding plate (16a, 16b), the pivot lever plate being optionally connected to the underride barrier (12) by a connecting element (26a, 26b) and the associated pivot lever plate (20a, 20b) having locking holes (38) on at least one holding device (14a), **characterised in that** of the locking holes, one, in each case, can engage with a locking pin (42) that is axially displaceably held relative to the pivot lever plate (20a) and to the base holding plate (16a) between a locking position and an unlocking position on a bar carrier plate (30) fixed relative to the base holding plate (16a), in order to lock the pivot lever plate (20a) and therefore the underride barrier (12) when the underride barrier (12) is in the securing position or in the clearance position, the pivot lever plate (20a) being located in regions in a sandwich arrangement between the base holding plate (16a) and the bar carrier plate (30).

2. Underride barrier according to claim 1, **characterised in that** the locking pin (42) is biased in a resilient manner toward its locking position.

3. Underride barrier for a load-transporting vehicle according to claim 1 or 2, **characterised by** an electromotive, hydraulic or pneumatic pivot drive device (74) for pivoting the underride barrier.

4. Underride barrier according to any one of the preceding claims, **characterised in that** the locking pin (42) is axially displaceably guided in a pin guiding device (40, 44, 46, 48), which is connected so as to be exchangeable, in particular by means of screws, to the bar carrier plate (30) and is arranged on the side of the bar carrier plate (30) remote from the pivot lever plate (20a), the locking pin (42) penetrating a through-bore of the bar carrier plate (30), in order to engage a relevant locking hole (38) of the pivot lever plate (20a).

5. Underride barrier according to any one of the preceding claims, **characterised in that** a hole grid adaptor plate (36) having the locking holes (38) is replaceably connected, in particular screwed, to the pivot lever plate (20a).

6. Underride barrier according to any one of the preceding claims, **characterised in that** the respective pivot lever plate (20a, 20b) is fixed to the underride barrier (12) by means of screws (62), the screws (62) penetrating a respective slot (60) in a fastening leg (58) abutting the underride barrier (12), of the pivot lever plate or, optionally, of an adaptor element (26a, 26b) provided between the pivot lever plate and underride barrier, the slots (60) being oriented such that their larger diameter lies in the longitudinal direction of the underride barrier (12).

7. Underride barrier according to claim 3 or any one of claims 4 to 6 directly or indirectly referring to claim 3, **characterised in that** the pivot drive device (74) comprises an electric linear drive, in particular an electric spindle drive.

8. Underride barrier according to any one of the preceding claims, **characterised in that** the underride barrier (12) is a square rod, in particular square tube, which is oriented in the arrangement on the load-transporting vehicle in the securing position in such a way that one longitudinal edge (52) of the square rod or square tube lies at the top in the manner of the ridge of a roof with faces adjacent thereto running obliquely downward.

9. Underride barrier according to any one of the preceding claims, **characterised in that** a stop (32) is provided at at least one of the base holding plates (16a, 16b), against which the respective pivot lever plate (20a or 20b) strikes with a counter-stop (34) during transition into the securing position.

10. Underride barrier according to claim 9, **characterised in that** the stop (32) or/and the counter-stop (34) can be adjusted so as to be alignable.

11. Underride barrier according to any one of the preceding claims, **characterised in that** each of the holding devices (14a, 14b) is allocated a respective device (126a, 126b) for fixing the underride barrier (12) to the holding device (14a, 14b) and **in that**, to fix the underride barrier (12), the respective device (126a, 126b) comprises clamping means (80, 82), which, in the assembly state on the vehicle, enclose the underride barrier (12) at its circumference, and engage it in a clamping manner.

12. Underride barrier according to claim 11, **characterised in that** the clamping means (80, 82) are bracket elements, which can be fastened to one another by screw connections (102, 106), so they form between them a closed receiving region for the underride barrier (12), substantially adapted to the contour of the underride barrier (12), the clamping effect between the clamping elements (80, 82) and the underride barrier (12) being adjustable by more or less firm tightening of the relevant screw elements.

13. Underride barrier according to claim 11 or 12, **characterised in that** one (80) of the clamping means (80, 82) has a fastening plate (110) for connection to a pivot lever plate (20a or 20b) of the relevant holding device (14a or 14b).

## Revendications

1. Dispositif anti-encastrement pour un véhicule de transport de charges, comprenant
une barrière anti-encastrement allongée, disposée normalement horizontalement pour la sécurisation d'une zone (27) côté arrière du véhicule de transport de charges pour se protéger contre la collision par l'arrière et l'encastrement par un autre véhicule et
un dispositif de support avec deux systèmes de support (14a, 14b) espacés l'un de l'autre dans le sens longitudinal de la barrière anti-encastrement (12) et disposés sur la barrière anti-encastrement (12) pour la fixation de cette barrière sur l'extrémité côté arrière du châssis de véhicule (2) ou éventuellement sur l'extrémité côté arrière d'une partie de carrosserie solidaire du châssis du véhicule de transport de charges, la barrière anti-encastrement (12) pouvant basculer par rapport au châssis de véhicule (2) autour d'un axe de pivotement (24) normalement horizontal entre une position de blocage bloquant la zone (27) à sécuriser et une position de libération libérant cette zone (27), le dispositif de support présentant également un système d'arrêt (28), au moyen duquel la barrière anti-encastrement (12) peut être verrouillée dans chaque position de pivotement,
chacun des dispositifs de support (14a, 14b) présentant en outre une plaque de retenue de base (16a, 16b) fixée sur le châssis du véhicule (2) ou éventuellement une partie de carrosserie solidaire du châssis et une plaque de levier pivotante (20a, 20b) disposée de façon mobile et pivotant autour de l'axe de pivotement sur la plaque de retenue de base (16a, 16b) au moyen d'un dispositif de palier pivotant (18a, 18b), laquelle plaque est reliée à la barrière anti-encastrement (12) éventuellement par un élément de liaison (26a, 26b), et la plaque de levier pivotant (20a, 20b) spécifique à au moins un dispositif de support (114a) présentant des trous de verrouillage (38),
**caractérisé en ce que**, parmi les trous de verrouillage, chaque fois un trou peut être en prise avec un doigt de verrouillage (42) maintenu coulissant dans le sens axial par rapport à la plaque de levier pivotante (20a) et à la plaque de retenue de base (16a) entre une position de verrouillage et une position de déverrouillage sur une plaque de support de verrou (30) fixée par rapport à la plaque de retenue de base (16a), afin d'arrêter la plaque de levier pivotante (20a) et donc la barrière anti-encastrement (12) lorsque la barrière anti-encastrement (12) est dans la position de blocage ou dans la position de libération, la plaque de levier pivotante (20a) étant disposée par endroits dans un agencement sandwich entre la plaque de retenue de base (16a) et la plaque de support de verrou (30).

2. Barrière anti-encastrement selon la revendication 1, **caractérisée en ce que** le doigt de verrouillage (42) est précontraint de façon élastique en direction de sa position de verrouillage.

3. Dispositif anti-encastrement pour un véhicule de transport de charges selon la revendication 1 ou 2,
**caractérisé par** un dispositif de commande de basculement (74) à moteur électrique, hydraulique ou pneumatique pour le basculement de la barrière anti-encastrement.

4. Barrière anti-encastrement selon l'une des revendications précédentes, **caractérisée en ce que** le doigt de verrouillage (42) est guidé de façon coulissante axialement dans un dispositif de guidage de doigt (40, 44, 46, 48), qui est relié de façon amovible avec la plaque de support de verrou (30), en particulier au moyen de vis et est disposé sur le côté, opposé à la plaque de levier pivotante (20a), de la plaque de support de verrou (30), le doigt de verrouillage (42) traversant un alésage de passage de la plaque de support de verrou (30) afin de mettre en prise un trou de verrouillage (38) concerné de la plaque de levier pivotante (20a),

5. Dispositif anti-encastrement selon l'une des revendications précédentes, **caractérisé en ce qu'**une plaque d'adaptation à trame perforée (36) présentant les trous de verrouillage (38) est reliée, en particulier vissée de façon amovible, avec la plaque de levier pivotante (20a).

6. Dispositif anti-encastrement selon l'une des revendications précédentes, **caractérisé en ce que** la plaque de levier pivotante (20a, 20b) respective est fixée au moyen de vis (62) sur la barrière anti-encastrement (12), les vis (62) traversant un trou oblong (60) respectif dans une aile de fixation (58), s'appuyant sur la barrière anti-encastrement (12), de la plaque de levier basculante ou éventuellement d'un élément adaptateur (26a, 26b) prévu entre la plaque de levier basculante et la barrière anti-encastrement, les trous oblongs (60) étant orientés de telle sorte que leur diamètre le plus long se trouve dans le sens longitudinal de la barrière anti-encastrement (12).

7. Dispositif anti-encastrement selon la revendication 3 ou l'une des revendications 4 à 6, rattachées directement ou indirectement à la revendication 3, **caractérisé en ce que** le dispositif de commande de basculement (74) comprend une commande linéaire électrique, en particulier une commande à vis électrique.

8. Dispositif anti-encastrement selon l'une des revendications précédentes, **caractérisé en ce que** la barrière anti-encastrement (12) est une barre carrée, en particulier un tube carré, qui est orienté dans le dispositif sur le véhicule de transport de charges dans la position de blocage de telle sorte qu'une arête longitudinale (52) de la barre carrée ou du tube carré est disposée en haut à la façon d'un faite avec des surfaces contiguës et orientées en biais vers le bas.

9. Dispositif anti-encastrement selon l'une des revendications précédentes, **caractérisé en ce que** sur au moins une des plaques de retenue de base (16a, 16b) est prévue une butée d'arrêt (32) sur laquelle la plaque de levier pivotante (20a ou 20b) concernée parvient avec une contrebutée (34) lors du passage dans la position de blocage.

10. Dispositif anti-encastrement selon la revendication 9, **caractérisé en ce que** la butée d'arrêt (32) et/ou la contrebutée (34) peuvent être déplacées de façon réglable.

11. Dispositif anti-encastrement selon l'une des revendications précédentes, **caractérisé en ce qu'**à chacun des dispositifs de support (14a, 14b) est associé un dispositif respectif (126a, 126b) pour la fixation de la barrière anti-encastrement (12) sur le dispositif de support (14a, 14b) et **en ce que** le dispositif concerné (126a, 126b) comprend pour la fixation de la barrière anti-encastrement (12) des moyens de serrage (80, 82), qui entourent dans l'état de montage sur le véhicule la barrière anti-encastrement (12) sur son pourtour et la maintiennent par serrage.

12. Dispositif anti-encastrement selon la revendication 11, **caractérisé en ce que** les moyens de serrage (80, 82) sont des éléments de bride qui peuvent être fixés les uns sur les autres par des assemblages vissés (102, 106), de sorte qu'ils forment entre eux une zone de logement fermée, sensiblement adaptée au contour de la barrière anti-encastrement (12), pour la barrière anti-encastrement (12), l'effet de serrage entre les éléments de serrage (80, 82) et la barrière anti-encastrement (12) pouvant être réglé par un serrage plus ou moins fort des éléments de vissage concernés.

13. Dispositif anti-encastrement selon la revendication 11 ou 12, **caractérisé en ce que** l'un (80) des moyens de serrage (80, 82) présente une plaque de fixation (110) pour l'assemblage avec une plaque de levier pivotante (20a ou 20b) du dispositif de support (14a ou 14b) concerné.
